## Europäisches Patentamt
## European Patent Office
## Office européen des brevets

(11) Numéro de publication: **0 165 918**
**B1**

(19)

(12)

# FASCICULE DE BREVET EUROPÉEN

(45) Date de publication du fascicule du brevet:
**04.01.89**

(51) Int. Cl.⁴: **B 65 G 1/08**

(21) Numéro de dépôt: **85870058.6**

(22) Date de dépôt: **25.04.85**

(54) **Dispositifs de distribution automatique de produits et magasin central réalisé à l'aide de ces dispositifs.**

(30) Priorité: **26.04.84 BE 212835**

(43) Date de publication de la demande:
**27.12.85 Bulletin 85/52**

(45) Mention de la délivrance du brevet:
**04.01.89 Bulletin 89/1**

(84) Etats contractants désignés:
**AT CH DE FR GB IT LI LU NL SE**

(56) Documents cité:
**CH-A-576 903**
**DE-A-2 029 999**
**FR-A-1 263 815**
**FR-A-1 324 460**
**GB-A-342 787**
**US-A-2 353 394**
**US-A-3 313 449**

(73) Titulaire: **Marchand, Michel, 130, Route de Genval,
B-1328 Lasne (BE)**

(72) Inventeur: **Marchand, Michel, 130, Route de
Genval, B-1328 Lasne (BE)**

(74) Mandataire: **Overath, Philippe, Cabinet Bede 13,
Avenue Antoine Depage, B-1050 Bruxelles (BE)**

## Description

La présente invention concerne des dispositifs de distribution automatique de produits ainsi qu'un magasin central réalisé à l'aide de ces dispositifs de distribution.

L'application de l'invention est particulièrement intéressante dans le domaine de la distribution automatique de produits pharmaceutiques à partir d'un magasin central muni de dispositifs de distribution selon l'invention.

On connaît déjà des installations de distribution automatique de produits dans lesquelles les produits sont généralement stockés sur une série de transporteurs horizontaux capables de délivrer les produits vers une bande de transport commune.

Des installations de ce genre sont notamment connues par les documents EP-A-26 754, EP-A-2 627 941, CH-A-282 314, DE-A-1 449 152 ou DE-A-2 313 808.

Par les documents FR-A-1 263 815 et GB-A-342 787, on connaît également des dispositifs de distribution automatique de produits entassés les uns sur les autres selon un plan incliné dont l'extrémité inférieure est munie d'un élément mobile pouvant être actionné par unité de produit à prélever.

L'inconvénient de ces dispositifs connu est que le magasin central de grande capacité formé par ces dispositifs occupe un volume très important vu le nombre des produits et les diverses variétés.

Le but de la présente invention est de proposer un dispositif de distribution de construction simple ayant une grande fiabilité de fonctionnement et permettant d'augmenter considérablement la capacité d'un magasin central pour un volume donné.

A cet effet, le dispositif de distribution est réalisé tel que défini dans les revendications 1 à 3.

L'invention concerne également un magasin central tel que défini dans la revendication 11.

D'autres avantages et particularités de l'invention ressortiront de la description d'un exemple de réalisation décrit ci-après en faisant référence aux dessins annexés dans lesquels:

- la figure 1 est une vue latérale d'un dispositif de distribution selon l'invention;
- la figure 2 est une vue en perspective partielle de l'extrémité inférieure du plan incliné;
- les figures 3 et 4 sont des vues explicatives montrant le fonctionnement de l'élément d'arrêt mobile;
- la figure 5 est une vue en perspective d'un magasin complet muni de plusieurs dispositifs de distribution selon l'invention;
- la figure 6 est une vue en coupe transversale du magasin selon la figure 5.

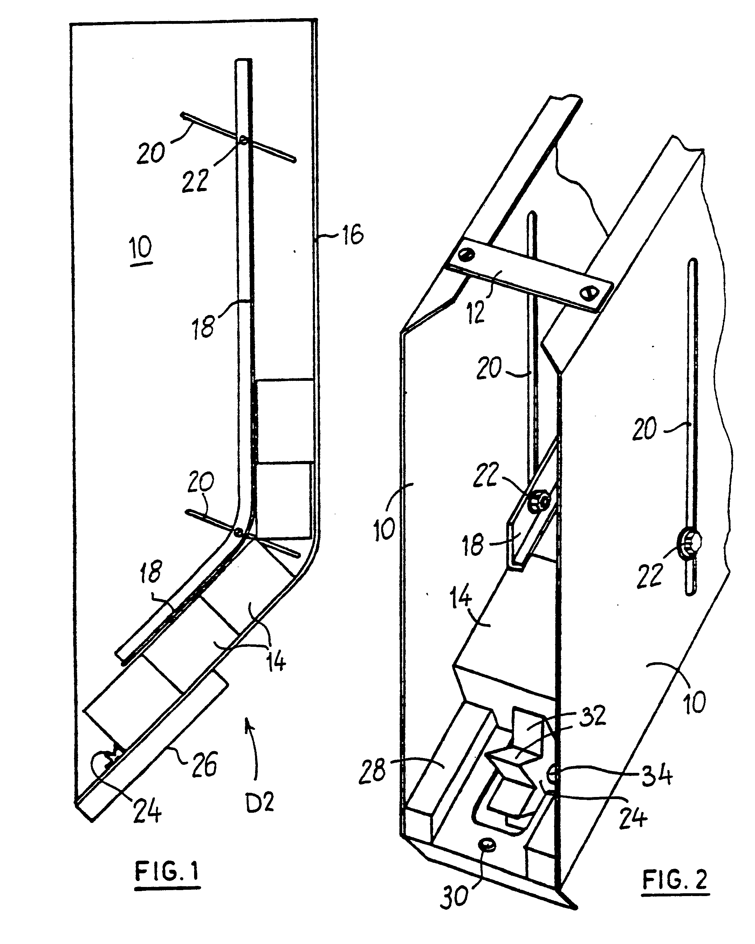

Comme illustré par les figures 1 et 2, le dispositif de distribution est composé de parois latérales 10 maintenues à distance par des entretoises 12 dont la longueur est adaptée suivant la largeur des produits 14.

Les produits identiques sont entreposés les uns sur les autres entre les deux parois 10 et sont maintenus d'une part par un rebord intérieur 16 de chaque paroi et d'autre part par des guides 18.

Ces guides 18 sont amovibles afin de permettre de régler la distance entre le rebord 16 et les guides 18.

A cet effet, on prévoit des boutonnières latérales 20 dans les parois 10 de manière à pouvoir régler la position des guides et les fixer à l'aide de vis 22.

Comme montré à la figure 1, les produits 14 peuvent être emmagasinés partiellement selon un plan incliné et partiellement selon une colonne verticale.

D'autres variantes de réalisation seront décrites plus loin dans la description.

Conformément à l'invention, l'extrémité inférieure de chaque dispositif de distribution est munie d'un élément d'arrêt mobile 24 faisant partie d'un ensemble de commande 26.

Comme montré à la figure 2, l'élément d'arrêt 24 peut coopérer avec des butées fixes 28 disposées de part et d'autre de l'élément 24.

Ceci est particulièrement indiqué lorsque la largeur des produits est importante.

A proximité de l'élément d'arrêt mobile 24 on prévoit habituellement un détecteur optique 30, ou autre, de manière à pouvoir contrôler le passage effectif d'un produit 14 ainsi qu'à pouvoir compter le nombre d'unités prélevées du produit.

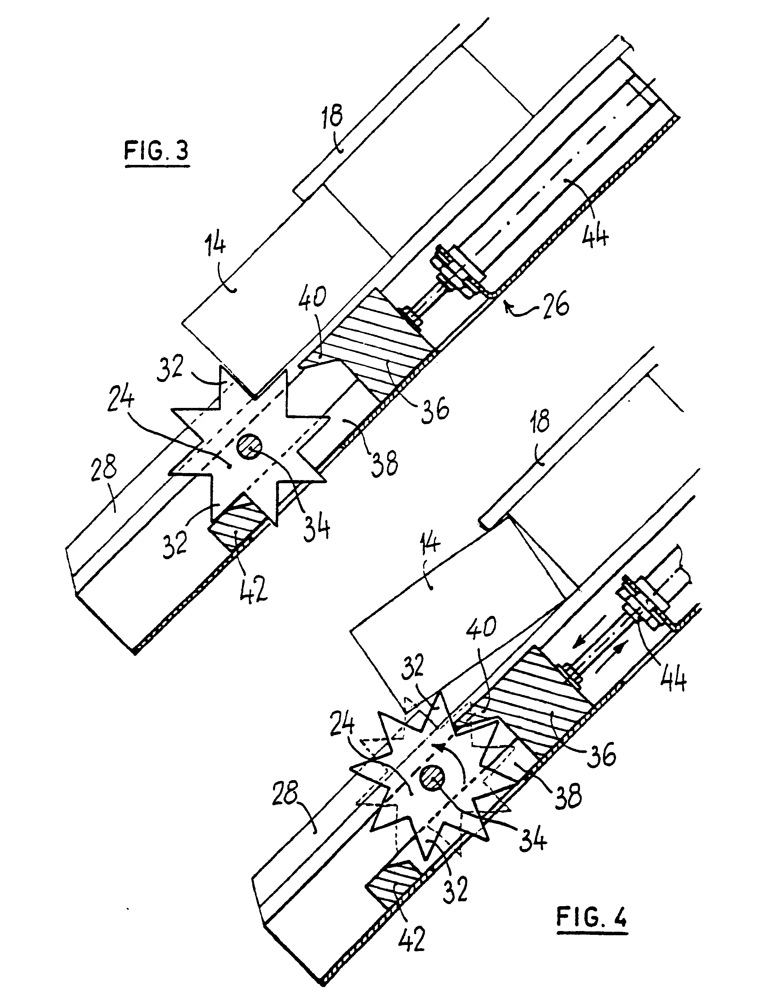

Sur les figures 3 et 4 on montre plus en détail comment fonctionne l'ensemble de commande 26 de l'élément d'arrêt mobile 24.

Selon le mode de réalisation proposé, cet ensemble 24 est constitué par une pièce en forme d'étoile présentant une série de crans d'arrêt périphériques 32 et pouvant pivoter librement autour d'un axe central 34.

La rotation de l'élément mobile 24 est toutefois limitée et commandée par un coulisseau 36 qui possède une excavation 38 dans laquelle peut se mouvoir l'élément 24 et qui est conformé de manière à pouvoir agir sur l'élément 24 par un mouvement de va-et-vient.

A cet effet, le coulisseau 36 possède d'un côté de l'élément 24 une languette d'attaque 40 et de l'autre côté un blochet de verrouillage 42.

Le mouvement de va-et-vient peut être transmis au coulisseau 36 par l'intermédiaire d'un vérin pneumatique 44 ou tout autre moyen approprié.

En position de repos ou d'attente (figure 3) l'élément d'arrêt mobile 24 est verrouillé par le blochet 42 qui est intercalé entre deux crans 32 de l'élément.

Le produit 14 est donc également immobilisé et maintenu par deux crans 32 diamétralement opposés.

En outre, et comme montré plus clairement à la figure 2, le produit 14 est également maintenu aux extrémtés latérales par des butées fixes 28.

Lorsqu'une commande est effectuée et qu'un produit doit être prélevé, le vérin 44 est actionné et imprime un mouvement de va-et-vient au coulisseau 36 (figure 4).

Dans un premier mouvement (aller) du coulisseau 36, la languette d'attaque 40 agit sur la pente inclinée d'un cran 32 qui se trouve en face d'elle; étant donné que le blochet 42 recule en même temps, l'élément mobile 24 est libéré et peut tourner autour de son axe 34.

Par cette rotation, le cran 32 actionné par la languette 40 soulève le produit 14 et fait passer celui-ci au-dessus des butées fixes 28 tout en le libérant complètement de manière que le produit 14 tombe vers le bas par son propre poids.

Dans un second mouvement (retour) du coulisseau 36, le blochet 42 agit sur le cran 32 qui se trouve en face de lui et complète le cycle de rotation limitée de l'élément d'arrêt 24 tout en verrouillant à nouveau celui-ci entre deux crans 32 suivants.

A ce moment, le dispositif de distribution se trouve à nouveau dans la position d'attente (figure 3) en bloquant le produit 14 suivant.

L'extrémité inférieure du dispositif de distribution (D2) est de préférence inclinée et la colonne de produits peut se prolonger verticalement comme illustré à la figure 1.

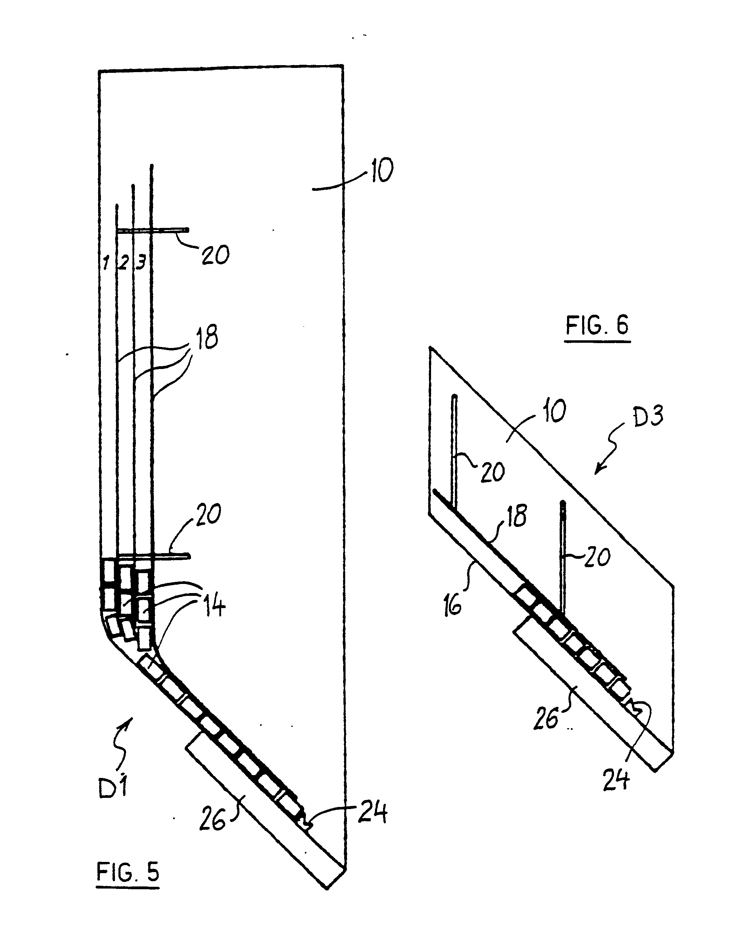

Dans une variante de réalisation (figure 5) on peut prévoir un dispositif (D1) dans lequel plusieurs colonnes verticales aboutissent sur le même plan incliné.

Dans cette réalisation, on prévoit plusieurs guides mobiles 18 qui seront de préférence commandés par des micro-vérins (non représentés) de manière à maintenir les produits dans les colonnes en attente et à libérer seulement le passage d'une colonne de produits à la fois vers le plan incliné.

Bien entendu on peut également prévoir un dispositif (D3) ayant uniquement une colonne de produits inclinée telle que montrée à la figure 6.

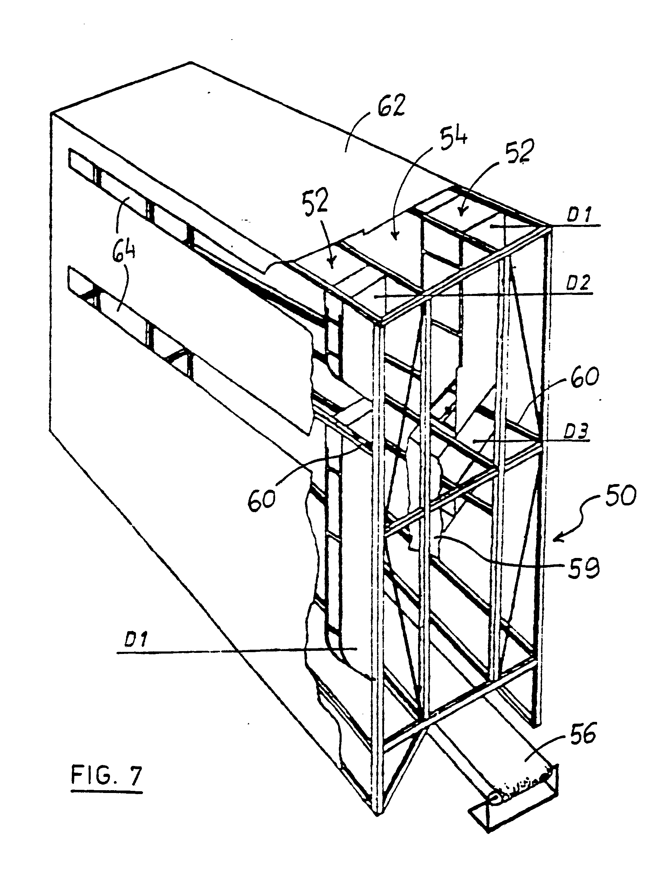

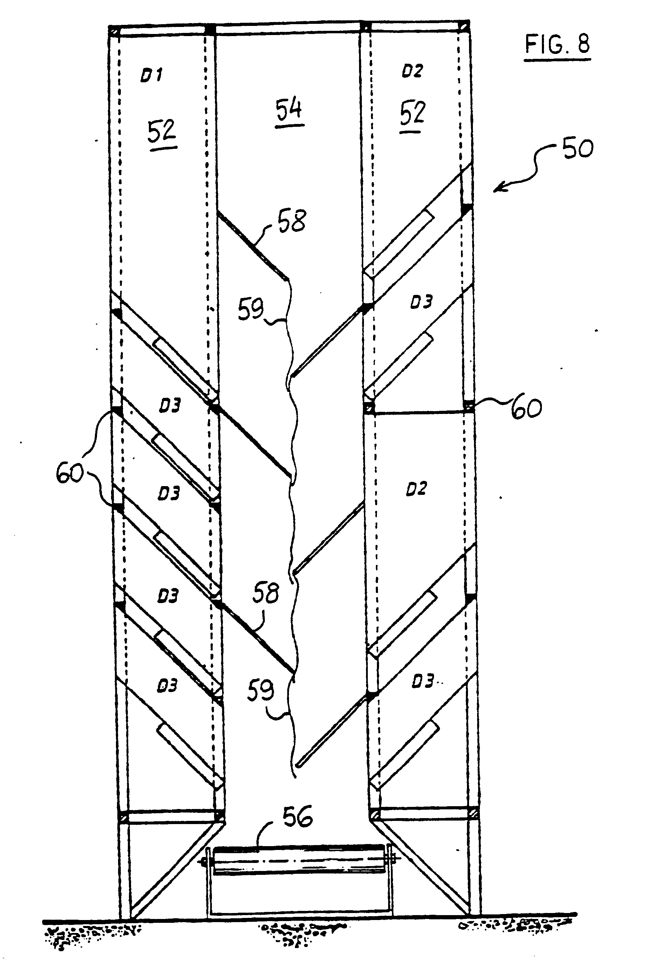

Les figures 7 et 8 montrent l'installation complète d'un magasin central muni de dispositifs de distribution de types différents tels que décrits ci-avant.

Le magasin central est constitué d'un châssis tubulaire 50 dont les parties latérales 52 contiennent les dispositifs D1, D2 et/ou D3 et dont la partie centrale 54 est aménagée de manière à pouvoir recueillir les produits prélevés et à les convoyer vers un transporteur à bande 56 qui achemine les produits vers le quai d'expédition.

Pour limiter la hauteur de chute et pour éviter d'endommager les produits, la partie centrale 54 du magasin est munie de parois inclinées 58 telles que décrites dans le brevet européen EP-26 754.

Avantageusement ces plans inclinés seront prolongés à leurs extremités inférieures de bavettes 59 en matière souple de manière à mieux amortir la chute des produits sur les plans inclinés superposés.

Les tubes 60 formant les longerons latéraux du châssis 50 peuvent avantageusement servir de conduites d'air sous pression pour asservir les vérins pneumatiques 44 de toute une rangée de dispositifs de distribution.

Bien entendu le magasin central peut être recouvert d'un habillage adéquat 62 en prenant soin de laisser des ouvertures 64 dans les côtés latéraux afin de permettre de réapprovisionner les dispositifs de distribution.

Cette nouvelle conception de magasin central offre les avantages suivants:

- contrôle rapide et visuel du stock ainsi que du fonctionnement général ;
- fiabilité de fonctionnement accrue par les organes mécaniques simplifiés et vérins pneumatiques avec durée de vie très longue ;
- réapprovisionnement facile même pendant le fonctionnement ;
- accès facile aux organes de commande, de détection et au niveau du câblage ;
- vitesse d'exécution d'une commande plus grande ;
- plus grande modularité des logements de produits ;
- construction légère et grande souplesse d'installation avec réduction du coût total d'un magasin complet.

**Revendications**

1. Dispositif de distribution automatique de produits comprenant une goulotte formée par des parois latérales (10) disposées en substance verticalement et pouvant contenir des produits entassés les uns sur les autres et dont l'extrémité inférieure est munie sur un plan incliné d'un ensemble de commande (26) pourvu d'un élément mobile (24) aménagé de manière à être actionné automatiquement par unité de produit à prélever, caractérisé en ce que entre les parois latérales (10) sont montés des guides réglables (18) suivant l'épaisseur des produits et en ce que ces guides (18) sont disposés de manière à obtenir plusieurs colonnes de produits disposées verticalement dans la goulotte et aboutissant vers le bas sur ledit plan incliné unique à l'extrémité duquel est monté l'ensemble de commande (26) pourvu de l'élément mobile (24) de prélèvement.

2. Dispositif selon la revendication 1, caractérisé en ce que les colonnes verticales sont disposées les unes à côté des autres et les guides mobiles (18) verticaux sont commandés par des micro-vérins de manière à maintenir les produits dans les colonnes en attente et à libérer seulement le passage d'une colonne de produits à la fois vers le plan incliné et l'ensemble de commande (26).

3. Dispositif selon la revendication 1 ou 2, caractérisé en ce que l'élément mobile (24) est constitué par une pièce en forme d'étoile présentant une série de crans d'arrêt périphériques (32) et pouvant pivoter librement autour d'un axe central (34) et en ce que cet élément (24) est commandé par une pièce coulissante (36) ayant une double fonction: la première fonction étant de maintenir l'élément mobile en position normale d'attente en tant que butée d'arrêt pour les produits et la deuxième fonction est d'agir sur l'élement mobile afin de le faire pivoter d'un cran provoquant la libération d'une unité de produit et de bloquer le passage du produit suivant.

4. Magasin central constitué par un châssis (50) dont les parties latérales (52) contiennent une série de dispositifs de distribution et dont la partie centrale (54) est aménagée de manière à pouvoir recueillir les produits prélevés et à les envoyer vers un transporteur (56) pouvant acheminer les produits vers un poste d'expédition, caractérisé en ce que les dispositifs de distribution comprennent chacun une goulotte formée par des parois latérales (10) disposées en substance verticalement et pouvant contenir des produits entassés les uns sur les autres, l'extrémité inférieure de la goulotte étant munie sur un plan incliné, d'un ensemble de commande (26) pourvu d'un élément mobile (24) aménagé de manière à être actionné automatiquement par unité de produit à prélever, des guides réglables (18) étant montés entre les parois latérales (10) suivant l'épaisseur des produits pour obtenir plusieurs colonnes de produits disposées verticalement dans la goulotte et aboutissant vers le bas sur ledit plan incliné unique à l'extrémité duquel est monté l'ensemble de commande (26) pourvu de l'élément mobile (24) de prélèvement.

## Patentansprüche

1. Vorrichtung zur automatischen Verteilung von Produkten, umfassend eine von Seitenwänden (10) gebildete Rutsche, die im wesentlichen senkrecht angeordnet sind und übereinandergestapelte Produkte aufnehmen können, und deren unteres Ende auf einer schiefen Ebene einer Steuereinheit (26) versehen ist, die ein bewegliches Element (24) aufweist, das so angeordnet ist, daß es automatisch pro zu entnehmender Produkteinheit betätigt wird, dadurch gekennzeichnet, daß zwischen den Seitenwänden (10) Führungen (18) vorgesehen sind, die entsprechend der Dicke des Produktes Verstellbar sind, und daß diese Führungen (18) so angeordnet sind, daß mehrere Produktsäulen entstehen, die in der Rutsche vertikal angeordnet sind und unten an die genannte einzige schiefe Ebene angrenzen, an deren Ende die mit dem beweglichen Element (24) für die Entnahme versehene Steuereinheit (26) angebracht ist.

2. Vorrichtung nach Anspruch 1, dadurch gekennzeichnet, daß die vertikalen Säulen nebeneinander angeordnet sind und die vertikalen beweglichen Führungen (18) mit Hilfe von Mikrozylindern so steuerbar sind, daß die Produkte in den Säulen bereitgehalten werden und jeweils nur eine Produktsäule zur schiefen Ebene und Steuereinheit (26) hin freigegeben wird.

3. Vorrichtung nach Anspruch 1 oder 2, dadurch gekennzeichnet, daß das bewegliche Element (24) ein sternförmiger Teil mit einer Reihe von am Umfang angeordneten Rasten (32) ist, der sich frei um eine Mittelachse (34) drehen kann, und daß dieses Element (24) von einem verschiebbaren Teil (36) gesteuert wird, der eine doppelte Funktion hat: die erste Funktion besteht darin, das bewegliche Element als Anschlag für die Produkte in Wartestellung zu halten, und die zweite Funktion besteht darin, auf das bewegliche Element einzuwirken, sodass sich dieses um eine Raste dreht, wodurch die Freigabe einer Produkteinheitbewirkt und das Austreten des folgenden Produktes blockiert wird.

4. Zentrallager bestehend aus einem Gestell (50), dessen Seitenteile (52) eine Reihe von Verteilungsvorrichtungen umfassen und dessen Mittelteil (54) so angeordnet ist, dass er die entnommenen Produkte aufnehmen und zu einer Transporteinrichtung (56) befördern kann, die die Produkte zu einer Versandstelle (56) weiterleiten kann, dadurch gekennzeichnet, dass die Verteilungsvorrichtungen jeweils eine von Seitenwänden (10) gebildete Rutsche umfasst, die im wesentlichen senkrecht angeordnet sind und übereinandergestapelte Produkte aufnehmen können, und deren unteres Ende auf einer schiefen Ebene mit einer Steuereinheit (26) versehen ist, die ein bewegliches Element (24) aufweist, das so angeordnet ist, dass es automatisch pro zu entnehmender Produkteinheit betätigt wird, zwischen den Seitenwänden (10) sind Führungen (18) vorgesehen, die entsprechend der Dicke des Produktes verstellbar sind, und diese Führungen (18) sind so angeordnet, dass mehrere Produktsäulen entstehen, die in der Rutsche vertikal angeordnet sind und unten an die genannte einzige schiefe Ebene angrenzen, an deren Ende die mit dem beweglichen Element (24) für die Entnahme versehene Steuereinheit (26) angebracht ist.

## Claims

1. Automatic dispensing device for products comprising a chute formed by lateral side walls (10) arranged substantially vertically and adapted to contain a plurality of products stacked on each other and of which the lower end is fitted, on an inclined slope, with a control unit (26) having a movable element (24) arranged so as to be actuated automatically by product unit taken, characterized in that guides (18) are mounted inbetween said side walls (10) and adjustable in accordance with the width of said products and wherein said guides (18) are arranged so as to obtain a plurality of columns of products stacked vertically in said chute and resting by the lower end on said single inclined slope at whose end said control unit (26) is fixed, provided with said movable dispensing element (24).

2. Device according to claim 1 characterized in that said columns are placed one next to the other and said movable vertical guides (15) are actuated by micro-cylinders so as to hold said products in said columns in a stand-by position and to free the passage towards said inclined slope and said control unit (26) only for one column of products at a time.

3. Device according to claim 1 or 2 characterized in that said movable element (24) consists of a star-shaped part presenting a series of peripheral stop notches (32) and being rotatably mounted on a central pin (34), wherein said element (24) is controlled by a sliding plunger (36) having a twin function a first function to maintain said movable element in a normal stop position acting as a blocking device for said products and a second one to slide so as to rotate said movable element by one notch causing the release of one product unit and to block the passing of the next product.

4. Central warehouse comprising a frame (50) with opposite sides (52) containing a plurality of dispensing devices, the central part (54) being adapted so as to receive the products taken and to carry them to a conveyor belt (56) which can carry said products to a dispatch station, characterized in that each of said dispensing devices contain one chute formed by lateral side walls (10) arranged essentially vertically and capable of containing a plurality of products stacked on each other, the lower end of the chute being provided on an inclined slope, with a control unit (26) having a movable element (24) arranged so as to be actuated by only one unit at product taken, wherein inbetween said lateral side walls (10) guides (15) are arranged which are adjustable in accordance with the width of said products in order to obtain a plurality of columns of products arranged vertically in said chute and resting at the lower end on said single inclined slope, the end of which is fitted with said control unit (26) provided with said movable dispensing element (24).

FIG. 1

FIG. 2

FIG. 3

18

14

40

26

44

32

24

36

28

32

38

34

42

18

14

40

32

44

24

36

28

42

38

34

32

34

32

42

FIG. 4

10

20

1 2 3

18

20

14

D1

26

24

FIG. 5

FIG. 6

10

D3

20

18

16

20

26

24

FIG. 7

FIG. 8